# FASCICULE DE BREVET EUROPEEN

(11) **EP 0 536 069 B1**
(45) Date de publication et mention de la délivrance du brevet: **22.04.1998**
(21) Numéro de dépôt: 92420346.6
(22) Date de dépôt: 01.10.1992
(51) Int. Cl.: H04L 7/00, H04J 3/06

(54) **Dispositif de synchronisation pour équipement d'extrémité d'un réseau de télécommunications numérique à transfert en mode asynchrone**
Endstationssynchronisierungsanordnung in einem digitalen asynchronen Übertragungsnetz
Synchronisation device for terminals connected to a digital telecommunication network with an asynchronous transmission mode

(30) Priorité: 04.10.1991 FR 9112266
(43) Date de publication de la demande: 07.04.1993
(73) Titulaire: ALCATEL ALSTHOM COMPAGNIE GENERALE D'ELECTRICITE, 75008 Paris (FR)
(72) Inventeur: Renault, Denis, F-91640 Janvry (FR); Campana, Roland, F-91940 Les Ulis (FR)
(74) Mandataire: El Manouni, Josiane

(56) Documents cités:
- EP-A- 0 228 021
- EP-A- 0 429 786
- EP-A- 0 433 154
- WO-A-88/07297
- US-A- 4 841 550

## Description

La présente invention est du domaine des télécommunications.

Elle conceme plus particulièrement un dispositif de synchronisation pour équipement d'extrémité d'un réseau de télécommunications numérique dit à transfert en mode asynchrone.

De tels réseaux sont bien connus et ne seront pas redécrits ici. On rappelle simplement que les données acheminées dans un tel réseau sont structurées en cellules, ou paquets de longueur fixe, comportant chacune une partie réservée à des informations utiles à transmettre par ce réseau, et un en-tête qui comporte des paramètres nécessaires au routage de cette cellule à travers ce réseau, et que l'acheminement de ces cellules à travers ce réseau se fait suivant la technique dite de circuit virtuel, technique hybride entre la commutation de circuits et la commutation de paquets, bien adaptée à la transmission de débits divers, pouvant aller jusqu'aux très hauts débits, et irréguliers dans le temps, à travers un réseau de télécommunications.

On rappelle en outre que les délais de transfert introduits par ces réseaux sont, pour une même communication, variables dans le temps, en fonction de la charge instantanée rencontrée aux noeuds de ce réseau.

Pour certaines applications telles que la téléphonie, nécessitant le respect d'un certain synchronisme dans des terminaux ainsi mis en relation par ce réseau, il est alors nécessaire de prévoir une synchronisation de ces terminaux, en vue d'obtenir dans chacun d'eux une restitution correcte des données reçues de ce réseau.

Il est ainsi connu de synchroniser un terminal en retrouvant, en réception, le rythme d'émission moyen par simple filtrage de la gigue de transfert introduite par ce réseau.

La demande de brevet WO 88/07297 décrit une méthode consistant à filtrer cette gigue de transfert en ajustant en permanence la fréquence du signal délivré par une horloge locale, en fonction des différences observées entre un niveau attendu de remplissage d'une mémoire-tampon, par les données reçues, ce niveau attendu correspondant à l'état de fréquence en cours de ce signal, et le niveau effectif de remplissage de cette mémoire-tampon.

Une telle méthode a cependant pour inconvénient de ne pas être totalement efficace en présence de contraintes relativement sévères sur l'obtention d'une telle horloge filtrée car, sauf perfectionnements qui la rendraient inévitablement plus complexe à mettre en oeuvre, elle implique nécessairement des réactions "par à-coups", qui sont totalement à éviter dans certaines applications.

Une telle application consiste par exemple dans le cas où une communication est à établir entre deux terminaux dont l'un est raccordé à un tel réseau à transfert en mode asynchrone, tel que le réseau RNIS à large bande, et où l'autre est raccordé à un réseau de télécommunications numérique à mode de transfert synchrone, tel que le réseau RNIS à bande étroite, avec ces deux réseaux munis de points d'accès de l'un à l'autre.

Une telle application pose ainsi le problème de la compatibilité entre ces deux réseaux, qui sont par définition basés sur des principes différents, impliquant notamment des interfaces différentes avec les terminaux qui leur sont raccordés.

On rappelle que sous le terme d'interface sont regroupées toutes les notions ayant trait à la nature des signaux échangés sur le support raccordant le terminal considéré au réseau considéré, ainsi qu'aux procédures d'établissement, de maintien et de libération d'une communication via le réseau concerné, et que ces interfaces font, pour chaque type de réseau, l'objet de normalisation.

La norme définissant l'interface, dite interface So, entre un abonné et le réseau RNIS à transfert en mode synchrone prévoit ainsi que toute phase d'établissement d'une communication, comporte, préalablement à la phase de signalisation relative à cette communication, une phase de synchronisation des terminaux considérés sur l'horloge de référence de ce réseau, par envoi, par ce réseau, de signaux déterminés à ces terminaux, à partir desquels ils peuvent reconstituer cette horloge de référence. Les signaux, de signalisation et de données, véhiculés à cette interface, le sont en effet sous une forme structurée en trames comportant des emplacements affectés de façon fixe soit à des signaux de signalisation, soit à des signaux d'information.

Dans le cas considéré ici du raccordement d'un terminal à ce réseau via un réseau à transfert en mode asynchrone, la norme définissant cette interface So devant continuer à être respectée, on associe à ce terminal un dispositif dit adaptateur et on décide alors que le signal d'horloge de référence délivré au terminal hors de la phase dite synchronisée est délivré par une horloge locale interne à ce dispositif adaptateur.

Le signal d'horloge fourni par cette horloge locale permet ainsi de rendre possibles les échanges de signaux de signalisation et donc finalement l'établisssement d'une communication. Les signaux de signalisation étant en effet, contrairement aux signaux d'information, générés de façon sporadique, le problème de restitution synchrone de ces signaux ne se pose pas.

Il est cependant nécessaire, dès le début des échanges d'information utiles relatifs à cette communication, de passer de ce synchronisme dit local à un synchronisme dit distant obtenu par reconstitution de l'horloge d'émission des données reçues, elle-même obtenue par filtrage de la gigue affectant le rythme de réception de ces données, suivant le principe indiqué plus haut.

En effet, en raison des différences de fréquence entre horloge locale et distante la conservation du synchronisme local obligerait, pour éviter des sur-débits dans la restitution des données reçues, à prévoir une mémoire-tampon de capacité beaucoup trop grande pour le stockage de ces données, préalable à leur restitution.

De plus, dans le type d'application considéré ici, la norme définissant l'interface So est relativement sévère en ce qui concerne la gigue maximale admissible pour un tel signal d'horloge puisque la limite à ne pas dépasser est de l'ordre de trois centaines de nanosecondes pour les composantes spectrales les plus élevées de cette gigue (en l'occurrence supérieures à 50 Hz) alors que la gigue de transfert obtenue pour un réseau à mode de transfert asynchrone peut dépasser une centaine de microsecondes.

Il s'en suit que ce changement de régime de synchronisation doit se faire d'une part en évitant des à-coups et d'autre part avec des exigences très élevées quant à la qualité du filtrage effectué.

Dans le type d'application considéré ici, on retrouve également cette exigence de transition en douceur d'un synchronisme à un autre dans le cas de deux terminaux situés chez un même abonné et raccordés au réseau par un adaptateur commun, avec deux canaux de communication distincts, notés B1 et B2, respectivement affectés à ces deux terminaux, comme prévu par la norme définissant l'interface So. Ceci est le cas lorsqu'une communication intéressant l'un de ces terminaux et utilisant l'un de ces canaux est libérée, alors qu'une autre communication intéressant l'autre terminal et utilisant l'autre canal, se poursuit, et que le synchronisme distant a été obtenu pour la première de ces communications (en supposant que celle-ci a été la première à s'établir dans le temps).

Ceci est également le cas lorsque deux telles communications sont en cours simultanément le dispositif permettant d'obtenir ce synchronisme distant devant pouvoir, à l'établissement d'une communication qui est la deuxième à s'établir dans le temps, utiliser le synchronisme distant obtenu pour la communication qui a été la première à s'établir dans le temps, sans que cela ne perturbe, au moment de cet établissement, la restitution des données relatives à cette deuxième communication.

La présente invention a notamment pour but de réaliser un dispositif permettant, pour une telle application, d'obtenir un tel synchronisme distant, en satisfaisant aux conditions évoquées ci-dessus, et notamment à la condition de transition sans à-coups d'un synchronisme à un autre tout en limitant alors les possibilités de sur-débits ou de sous-débits génératrices d'erreurs pour la restitution des données pendant ces phases de transition.

La présente invention a en outre pour but la réalisation d'un tel dispositif permettant de satisfaire auxdites conditions sans accroissement notable de complexité du dispositif adaptateur déjà requis à l'interface entre un réseau à transfert en mode asynchrone et les terminaux raccordés à ce réseau, et particulièrement en faisant usage de composants déjà existant dans ledit dispositif adaptateur pour remplir d'autres fonctions telle que la fonction dite de décellulisation, c'est-à-dire de passage de la structure en cellules (asynchrones) utilisée pour la transmission des informations utiles à travers le réseau à transfert en mode asynchrone, à la structure en trames (synchrones) utilisée pour la transmission des informations utiles à l'interface So.

Bien que l'exposé qui précède du problème technique résolu par l'invention ait été fait plus particulièrement en relation avec l'application particulière définie dans ce qui précède, l'invention n'est cependant pas limitée à cette application particulière et est utilisable dans toute application dans laquelle un problème similaire se poserait.

Par ailleurs dans cette application particulière, l'invention est utilisable aussi bien du côté d'un terminal ainsi raccordé à un réseau à transfert en mode asynchrone que du côté d'un point d'accès de ce réseau au réseau à transfert en mode synchrone ; pour cette raison on utilisera le terme d'équipement d'extrémité d'un réseau à transfert en mode asynchrone pour désigner le type d'équipement auquel le dispositif suivant l'invention s'applique.

La présente invention a pour objet un dispositif de synchronisation pour équipement d'extrémité d'un réseau de télécommunications dit à transfert en mode asynchrone, ce dispositif comportant des moyens de filtrage de la gigue de transfert introduite par un tel réseau et affectant le rythme de réception, par ledit équipement, des données acheminées à travers ce réseau, et ces moyens de filtrage comportant :
- des moyens d'asservissement de la fréquence d'un signal d'horloge local délivré par une horloge locale interne audit équipement, à celle du signal issu desdits moyens de filtrage ;
- et une mémoire-tampon, écrite avec lesdites données, à leur rythme de réception par ledit équipement, et des moyens de lecture de cette mémoire-tampon, au rythme dudit signal issu desdits moyens d'asservissement de fréquence ;
caractérisé en ce que les moyens d'asservissement de la fréquence d'un signal d'horloge local comportent une boucle à verrouillage de phase et un diviseur de fréquence délivrant ledit signal d'horloge local à partir d'un signal inteme de cette boucle, de fréquence multiple de la fréquence de signal de sortie de cette boucle ;
et en ce que lesdits moyens de lecture commandent la lecture avec un retard, par rapport à l'écriture, déterminé de façon à minimiser les risques liés aux sous-débits dans la restitution des données à l'issue de cette lecture, pendant les temps de réaction desdits moyens de filtrage et d'asservissement, tout en restant dans une marge admissible pour le retard à la restitution de ces données.

Suivant une autre caractéristique de l'invention, ladite mémoire-tampon est en outre dimensionnée de façon à minimiser les risques liés aux sur-débits dans la restitution des données reçues, pendant lesdits temps de réaction.

D'autres objets et caractéristiques de la présente invention apparaîtront à la lecture de la description suivante d'exemples de réalisation, ladite description étant plus particulièrement faite dans le cadre de l'application de l'invention à ladite configuration, et étant faite en relation avec les dessins ci-annexés dans lesquels :
- la figure 1 est un schéma synoptique d'un dispositif suivant l'invention.
- La figure 2 est un schéma synoptique d'un exemple de moyens de filtrage et d'asservissement de phase intervenant dans le schéma de la figure 1.
- La figure 3 est un schéma synoptique de l'ensemble formé par les mémoires-tampons et leur dispositif de commande de lecture ainsi que par les convertisseurs parallèle-série associés et leur dispositif de commande.
- La figure 4 est un schéma synoptique des moyens de détection d'absence de tampon de synchronisation, intervenant dans le schéma de la figure 3.
- La figure 5 est un schéma synoptique des moyens de création de tampon de synchronisation, intervenant dans le schéma de la figure 3.
- La figure 6 est un schéma synoptique des moyens de détection de débordement de tampon de synchronisation, intervenant dans le schéma de la figure 3.
- La figure 7 est un schéma synoptique des moyens de commande des convertisseurs parallèle-série disposés en sortie des mémoires-tampons, intervenant dans le schéma de la figure 3.

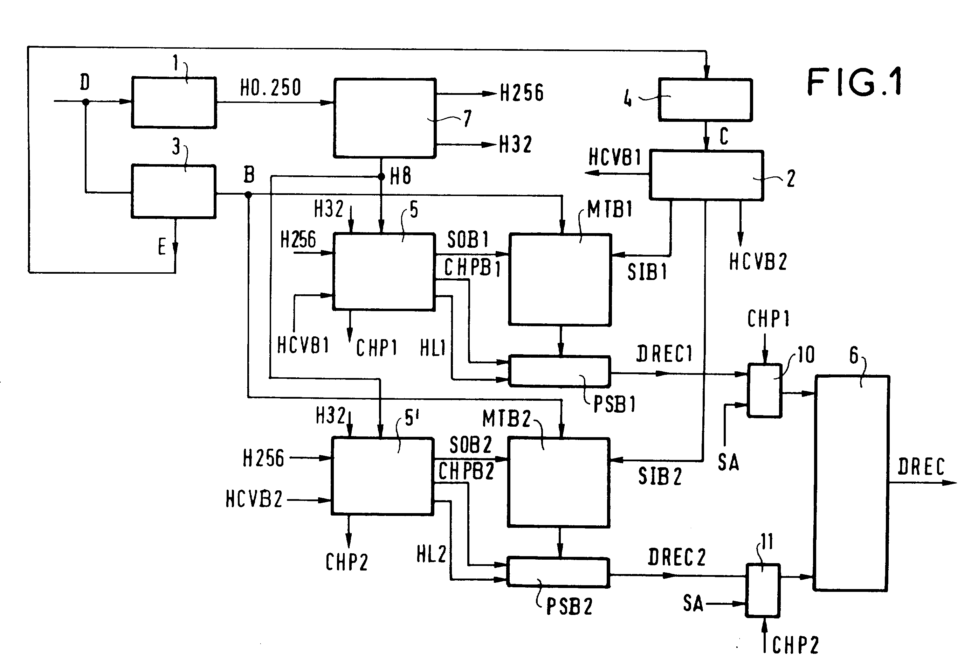

Le dispositif représenté sur la figure 1, inclus dans un équipement d'extrémité d'un réseau de télécommunication numérique à transfert en mode asynchrone, comporte des moyens référencés 1, de récupération du rythme des données, ou cellules, référencées D, reçues par ce dispositif.

Le signal d'horloge fourni par ces moyens 1 est noté H0.250. On considère en effet ici à titre d'exemple que le rythme moyen d'arrivée des cellules est de 250 Hz, et on note en outre les différents signaux d'horloge intervenant dans cette description par un indice correspondant à la valeur de fréquence de ce signal, les différentes valeurs considérées ici n'étant bien entendu données qu'à titre d'exemple.

Ces cellules, dont on rappelle qu'elles sont structurées en octets, avec, par cellule, un nombre d'octets dits d'informations fixé égal à 32, sont, dans l'exemple d'application considéré ici, écrites dans l'une ou l'autre de deux mémoires-tampons, notées MTB1, MTB2, structurées en octets, à un rythme dérivé de celui du signal H 0.250, de façon à assurer une écriture de ces cellules par octets d'information successifs, ce rythme d'écriture étant fourni par un moyen, 2, de commande d'écriture qui ne sera pas décrit ici de façon plus détaillée, ne constituant pas en lui-même l'objet de la présente invention. Les mémoires tampons MTB1 et MTB2 permettent, dans l'exemple d'application considéré ici, de stocker des octets d'information relatifs à l'un ou l'autre des canaux B1 et B2 de l'interface So, comme rappelé plus haut.

Les signaux de commande d'écriture des mémoires tampon MTB1 et MTB2, issus du moyen de commande d'écriture 2, sont notés respectivement SIB1 et SIB2. Les signaux de fin d'écriture de cellule sont notés respectivement HCVB1 et HCVB2.

Les octets d'information à écrire dans ces mémoires tampons sont issus d'un moyen, 3, de séparation des cellules en en-tête E et en octets d'information B, les données d'en-tête E étant aiguillées vers un moyen 4 d'exploitation de données de signalisation contenues dans cet en-tête, ce moyen 4 fournissant au moyen de commande d'écriture 2 un signal C d'indication d'occupation des canaux B1 et B2, et les octets d'information correspondants étant alors appliqués aux entrées des mémoires-tampons correspondantes.

Le dispositif représenté sur la figure 1 comporte en outre un circuit le commande de lecture des mémoires-tampons MTB1 et MTB2 ainsi que de deux convertisseurs parallèle-série associés à ces mémoires-tampons, PSB1 et PSB2, permettant de convertir les octets ainsi lus dans ces mémoires-tampons en trains d'éléments binaires sous forme série, notés DREC1 et DREC2, qui sont ensuite multiplexés dans un multiplexeur 6 pour former un train d'éléments binaires unique, noté DREC, contenant les informations constitutives des canaux B1 et B2 de l'interface So.

On a décomposé sur la figure 1 ce circuit de commande de lecture en un circuit, 5, relatif à la mémoire-tampon MTB1, et en un circuit, 5', relatif à la mémoire-tampon MTB2.

Les signaux de commande d'écriture des mémoires-tampons MTB1 et MTB2 sont notés respectivement SOB1 et SOB2, les signaux de commande de chargement en parallèle des convertisseurs PSB1 et PSB2 sont notés respectivement CHPB1 et CHPB2, et les signaux d'horloge de lecture en série de ces convertisseurs sont notés respectivement HL1 et HL2.

Le dispositif représenté sur la figure 1 comporte en outre un moyen 7 de filtrage de la gigue de transfert affectant le signal H 0.250, et d'asservissement de la phase de signaux d'horloge locaux à la phase du signal obtenu à l'issue de ce filtrage, ces signaux d'horloge locaux ayant respectivement des fréquences moyennes multiples de la fréquence moyenne 250 Hz du signal H 0.250 et étant respectivement utilisés pour fournir les différents rythmes caractéristiques de l'interface So au multiplexeur 6 (bien que ceci ne soit pas illustré explicitement sur la figure 1) et aux différents éléments du circuit de commande de lecture, ainsi qu'il va être décrit dans ce qui suit.

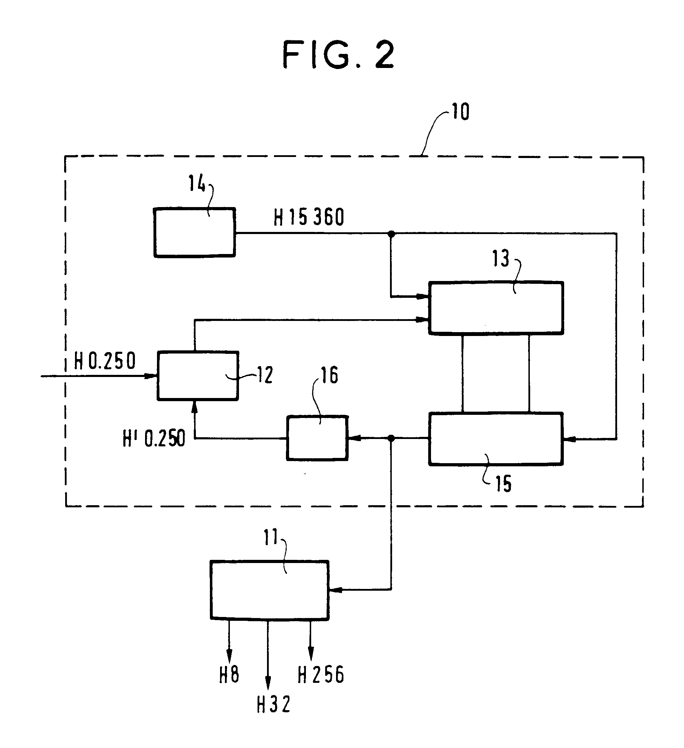

Ce moyen 7 comporte, dans l'exemple de réalisation rappelé sur la figure 2, une boucle à verrouillage de phase numérique 10 et un diviseur de fréquence 11.

La boucle à verrouillage de phase comporte de façon connue un détecteur de phase 12 qui compare ici la phase du signal H 0.250, dit signal d'entrée de cette boucle, à la phase d'un signal dit signal de sortie de cette boucle, obtenu en réalisant les opérations suivantes :
- commande de comptage, ou de décomptage, suivant le résultat de ladite comparaison de phase, d'un compteur 13 dont la plage de comptage est fixée par un coefficient K, et dont le rythme de comptage est fourni par un oscillateur 14 qui délivre en l'occurrence un signal d'horloge H 15360 de fréquence multiple de la fréquence moyenne du signal H 0.250,
- ajout, ou retrait, au moyen d'un circuit 15, d'impulsions à un signal d'horloge issu de l'oscillateur 14, ces ajouts ou ces retraits étant effectués en cas de débordement, dans un sens ou dans l'autre, du compteur 13,
- division de la fréquence du signal fourni par le circuit 15, au moyen d'un diviseur de fréquence 16 par un nombre entier déterminé de façon à obtenir en moyenne (c'est-à-dire compte tenu des ajouts et des retraits d'impulsions effectués par ce circuit 15) la fréquence 250 Hz.

L'oscillateur 14 fournit en l'occurrence un signal d'horloge dont la fréquence est également multiple des fréquences caractéristiques de la structure de l'interface So considérée. Cette fréquence est en l'occurrence choisie égale à 15360 kHz.

Soient H8, H32 et H256 les signaux d'horloge délivrés par le diviseur 11 et ayant respectivement pour fréquence moyenne la fréquence de trames d'octets, et d'éléments binaires de cette structure, soit respectivement 8 kHz, 32 kHz et 256 kHz.

Il est à remarquer que dans le cadre de l'exemple d'application défini plus haut, la boucle à verrouillage de phase est en outre avantageusement utilisée pour fournir en outre le signal d'horloge permettant d'obtenir ledit synchronisme local. Cette boucle, bien que non alimentée, dans ce cas, par un signal d'entrée, continue alors à fournir un signal de sortie, basé sur le dernier état de phase du signal d'entrée et utilisé pour obtenir ce synchronisme local.

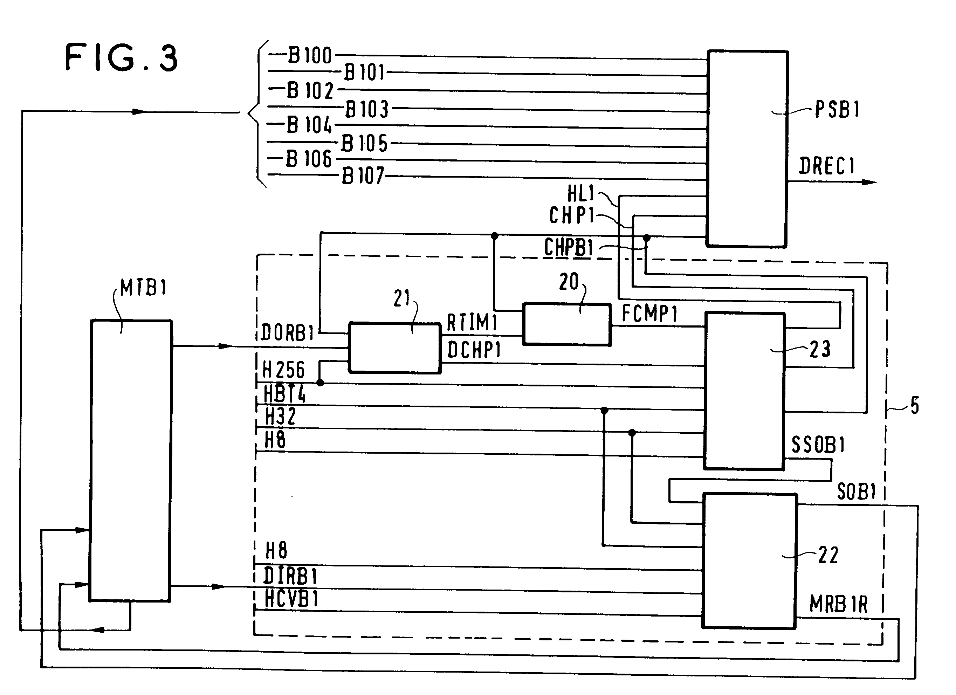

Le schéma de la figure 3 représente plus en détail l'un des circuits de commande de lecture des mémoires-tampons, à titre d'exemple celui, 5, relatif à la mémoire-tampon MTB1 et à son convertisseur parallèle-série de sortie PSB1.

Ce circuit comporte un moyen 20 de création d'un tampon dit de synchronisation à l'intérieur de la mémoire-tampon MTB1, à l'initialisation, c'est-à-dire à l'ouverture du canal B1, ou à tout moment lorsque la réserve ainsi constituée grâce à ce tampon de synchronisation, à l'initialisation vient à s'épuiser.

Ce moyen 20 procède essentiellement par blocage temporaire de l'horloge de lecture de la mémoire-tampon, pendant une durée correspondant à la capacité souhaitée pour ce tampon de synchronisation, ce qui revient à introduire, dans la restitution des données par cette mémoire-tampon, un retard correspondant à cette durée.

Par un dimensionnement suffisant de ce tampon de synchronisation ce retard permet ainsi d'éviter les risques liés aux sous-débits en sortie de la mémoire-tampon pendant les temps de réaction des moyens 7 de filtrage et d'asservissement. La taille de ce tampon de synchronisation est cependant limitée de façon à rester dans une marge admissible pour le retard à la restitution des données ainsi apporté. Dans l'exemple d'application rappelé plus haut, ce tampon de synchronisation sera avantageusement dimensionné de façon à contenir une cellule, ou une demi-cellule.

La mémoire-tampon est en outre elle-même avantageusement dimensionnée de façon à éviter les risques liés aux sur-débits en sortie de cette mémoire-tampon, pendant les temps de réaction des moyens 7 de filtrage et d'asservissement.

Le moyen 20 de création de tampon de synchronisation est commandé par un circuit 21 de détection d'absence de tampon de synchronisation à l'intérieur de la mémoire-tampon MTB1.

En cas de sur-débit en entrée de la mémoire-tampon, il est au contraire nécessaire d'accélérer la lecture de cette mémoire-tampon en vue de revenir à la dimension initialement fixée pour ce tampon de synchronisation. C'est pourquoi le circuit 5 comporte également des moyens, 22, dits de détection de débordement de tampon de synchronisation, ayant cette fonction de détection de débordement et d'accélération momentanée de lecture de la mémoire-tampon.

L'horloge de lecture SOB1 de la mémoire-tampon MTB1 est, sur ce circuit 5, générée par ces mêmes moyens 22 qui reçoivent également, à cette fin, un signal SSOB1 incluant les blocages momentanés de cette horloge de lecture, en vue de la création du tampon de synchronisation, ce signal SSOB1 étant lui-même généré, sur cette figure, par des moyens 23 de commande du convertisseur parallèle-série PSB1.

Sur la figure 3 les éléments binaires constitutifs d'un octet lu dans la mémoire-tampon sont notés B1O0 à B1O7. Sur cette figure 3 sont en outre notés DIRB1 et DORB1 deux signaux indiquant respectivement que la mémoire-tampon MTB1, constituée ici par une mémoire du type FIFO, est prête à accepter un octet en entrée ou à délivrer un octet en sortie.

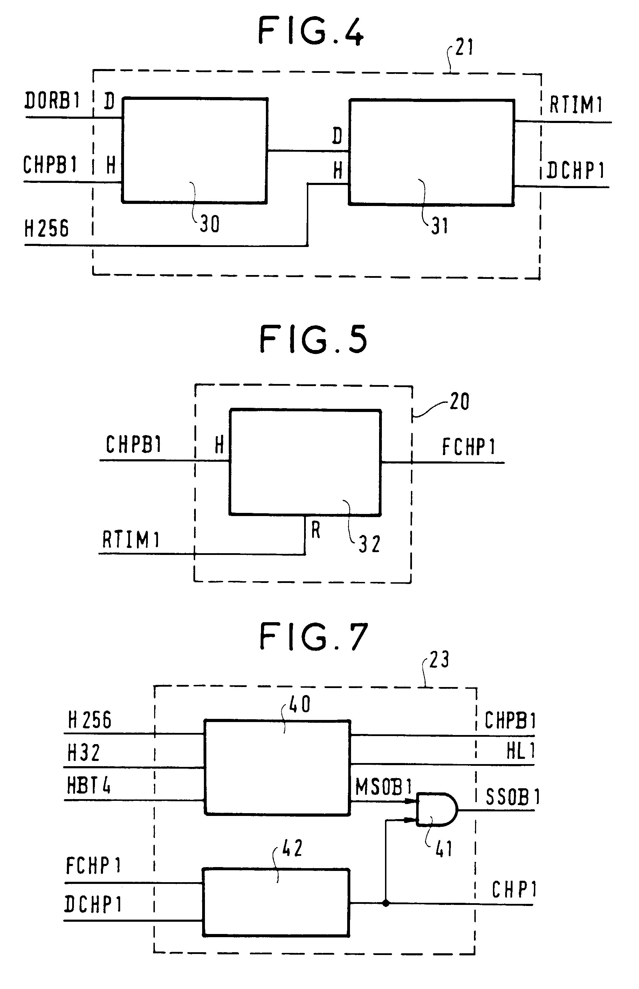

Le moyen de détection d'absence de tampon de synchronisation est représenté sur la figure 4. Il comporte un circuit 30 de détection d'état vide de la mémoire-tampon MTB1. Ce circuit 30 procède en l'occurrence par échantillonnage du signal DORB1, reçu sur une entrée référencée D de ce circuit, par le signal CHPB1 d'horloge de chargement du registre parallèle-série PSB1, reçu sur une entrée, référencée H, de ce circuit. Suivant l'état du signal de sortie du circuit 30, c'est-à-dire suivant que la mémoire-tampon est vide ou pleine, l'un des signaux de sortie d'un circuit 31 d'analyse de cet état, est actif. Le circuit 31 procède en l'occurrence par échantillonnage du signal de sortie du circuit 30, reçu sur une entrée référencée D du circuit 31, par le signal d'horloge H256 reçu sur une entrée référencée H de ce circuit.

L'un de ces signaux de sortie du circuit 31, DCHP1, actif lorsque la mémoire-tampon est vide, entraîne le début de l'émission d'une séquence de remplacement telle que par exemple un silence audiofréquence à la place des éléments binaires de sortie du registre parallèle série PSB1. On notera que le schéma de la figure 1 comporte en outre un aiguilleur 10 recevant le signal DREC1, et une telle séquence de remplacement/notée SA, et sélectionnant l'un ou l'autre des signaux DREC1 et SA en fonction d'un signal de commande, noté CHP1, qui sera explicité ultérieurement. Il est de même prévu pour la mémoire-tampon MTB2, un aiguilleur 11 recevant les signaux DREC2 et SA, et commandé par un signal noté CHP2.

Un autre signal de sortie du circuit 31, RTIM1, actif lorsque la mémoire-tampon est vide, est utilisé pour la réinitialisation des moyens de création du tampon de synchronisation.

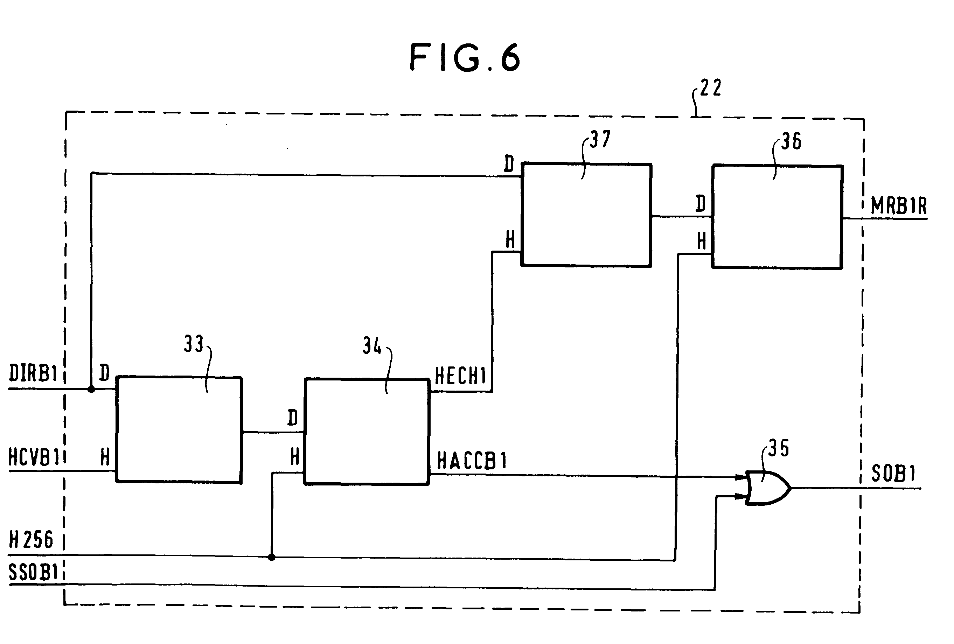

Ces derniers moyens sont maintenant décrits en relation avec la figure 5.

Ils comportent un compteur, 32,par "n", où "n" désigne la taille du tampon de synchronisation exprimée en nombre d'octets, ce compteur étant incrémenté par le signal CHPB1 d'horloge de chargement du registre parallèle-série PSB1, remis à zéro par le signal RTIM1 défini ci-dessus, et fournissant un signal FCHP1 d'indication du passage par l'état "n" de ce compteur, ce dernier signal indiquant la fin de l'émission d'une séquence de remplacement telle que par exemple un silence audiofréquence au lieu des éléments binaires de sortie du registre parallèle série PSB1.

Les moyens de détection de débordement du tampon de synchronisation représentés sur la figure 6 comportent un circuit 33 de détection d'un état plein de la mémoire-tampon MTB1. Ce circuit 33 procède en l'occurrence par échantillonnage du signal DIRB1 reçu sur une entrée référencée D de ce circuit, par le signal HCVB1 défini plus haut, reçu sur une entrée référencée H de ce circuit.

Suivant l'état du signal de sortie du circuit 33, c'est-à-dire suivant que la mémoire-tampon est pleine ou non, l'un des signaux de sortie d'un circuit 34 d'analyse de cet état, est actif. Ce circuit 34 procède en l'occurrence par échantillonnage du signal de sortie du circuit 33, reçu sur une entrée référencée D du circuit 34, par le signal d'horloge H256 reçu sur une entrée référencée H de ce circuit.

L'un des signaux de sortie du circuit 34, HACCB1, actif lorsque la mémoire-tampon est pleine, accélère le rythme de lecture de cette mémoire-tampon afin de lire "n" octets de cette mémoire en un temps réservé habituellement à la lecture d'un seul octet.

Ce signal HACCB1 est combiné, dans un "OU" logique 35, avec le signal SSOB1 défini plus haut, pour former le signal SOB1 d'horloge de lecture de la mémoire-tampon.

Un autre signal de sortie du circuit 34, HECH1, actif lorsque la mémoire-tampon est pleine, est utilisé pour échantillonner le signal DIRB1, de façon à détecter un éventuel maintien de l'état plein de la mémoire-tampon en dépit de l'accélération de son rythme de lecture, ce qui correspond à un mauvais fonctionnement auquel il convient de remédier par une remise à zéro de la logique de contrôle de la mémoire FIFO formant cette mémoire-tampon.

Cette remise à zéro est obtenue au moyen d'un signal MRB1R fourni par un circuit 36 d'analyse du résultat fourni par un circuit 37 d'échantillonnage du signal DIRB1 par le signal HECH1, le signal DIRB1 étant reçu sur une entrée référencée D de ce circuit 37 et le signal HECH1 sur une entrée référencée H de ce circuit 37.

Le circuit 36 procède également par échantillonnage du signal de sortie du circuit 37, reçu sur une entrée référencée D de ce circuit, par le signal d'horloge H256, reçu sur une entrée référencée H de ce circuit.

Les moyens de commande représentés sur la figure 7 comportent une base de temps 40 qui génère le signal CHPB1 de commande de chargement du registre parallèle-série PSB1 et le signal HL1 d'horloge d'émission des éléments binaires contenus dans ce registre, à partir des signaux d'horloge H8, H32 et H256 délivrés par les moyens de filtrage et d'asservissement 7 et d'un signal d'horloge HBT4 obtenu à partir du signal d'horloge H8.

Le signal HBT4 correspond aux emplacements précédant, sur l'interface So, les emplcements affectés au canal B1, de façon à permettre, par un chargement du registre parallèle-série aux instants correspondant à ces emplacements précédents, une émission ultérieure dans les emplacements suivants affectés au canal B1.

Comme indiqué plus haut, les moyens de commande représentés sur la figure 7 comportent également des moyens, 41, 42, de création du signal SSOB1 qui est combiné, sur la figure 6, avec le signal HACCB1 pour former le signal SOB1 d'horloge de lecture de la mémoire-tampon MTB1.

La référence 41 désigne une porte logique qui reçoit un premier signal, noté MSOB1, fourni par la base de temps 40 à partir du signal d'horloge H 32.

Cette porte logique 41 reçoit en outre un signal dit de forçage de l'émission d'une séquence remplacement à la place des données stockées dans la mémoire-tampon MTB1, et noté CHP1.

Ce signal CHP1, utilisé pour la commande du aiguilleur 10 de la figure 1, est issu d'un circuit 42 qui forme ce signal à partir des signaux FCHP1, DCHP1 et définis dans ce qui précède, ces signaux définissant respectivement le début et la fin de l'émission d'une telle séquence de remplacement.

## Revendications

1. Dispositif de synchronisation pour équipement d'extrémité d'un réseau de télécommunications dit à transfert en mode asynchrone, ce dispositif comportant des moyens (7) de filtrage de la gigue de transfert introduite par un tel réseau et affectant le rythme de réception, par ledit équipement, des données acheminées à travers ce réseau, et ces moyens de filtrage (7) comportant :
- des moyens (10) d'asservissement de la fréquence d'un signal d'horloge local délivré par une horloge locale inteme audit équipement, à celle du signal issu desdits moyens de filtrage ;
- et une mémoire-tampon (MTB1, MTB2), écrite avec lesdites données, à leur rythme de réception par ledit équipement, et des moyens (5, 5') de lecture de cette mémoire-tampon, au rythme dudit signal issu desdits moyens d'asservissement de fréquence ;
caractérisé en ce que les moyens (10) d'asservissement de la fréquence d'un signal d'horloge local comportent une boucle (11 à 16) à verrouillage de phase (10) et un diviseur de fréquence (11) délivrant ledit signal d'horloge local à partir d'un signal inteme de cette boucle, de fréquence multiple de la fréquence de signal de sortie de cette boucle ;
et en ce que lesdits moyens de lecture (5, 5') comportent des moyens (20, 21) pour commander la lecture avec un retard, par rapport à l'écriture, déterminé de façon à minimiser les risques liés aux sous-débits dans la restitution des données à l'issue de cette lecture, pendant les temps de réaction desdits moyens de filtrage et d'asservissement, tout en restant dans une marge admissible pour le retard à la restitution de ces données

2. Dispositif selon la revendication 1, caractérisé en ce que ladite mémoire-tampon est en outre dimensionnée de façon à minimiser les risques liés aux sur-débits dans la restitution des données reçues, pendant lesdits temps de réaction.

3. Dispositif selon l'une des revendications 1 à 2, caractérisé en ce que lesdits moyens de lecture comportent des moyens (41) de blocage du signal d'horloge de lecture de ladite mémoire-tampon, à l'initialisation, pendant une durée correspondant audit retard.

4. Dispositif selon la revendication 3, caractérisé en ce que lesdits moyens de blocage sont en outre commandés de façon à réaliser l'introduction dudit retard à tout moment cas de débordement de ladite mémoire-tampon.

5. Dispositif selon l'une des revendications 1 à 4, caractérisé en ce que ladite mémoire-tampon consiste en une mémoire-tampon dite de décellulisation utilisée pour la conversion des cellules reçues dudit réseau en entités admissibles par ledit équipement d'extrémité.

6. Dispositif selon l'une des revendications 1 à 5, caractérisé en ce qu'il comporte en outre, dans le cas d'équipement d'extrémité émettant ou recevant sur un support synchrone, des moyens pour délivrer à cet équipement un signal dit de synchronisme local, issu d'une horloge locale, pendant la phase de signalisation au cours de l'établissement d'une communication intéressant cet équipement d'extrémité.

7. Dispositif selon les revendications 1 et 6, caractérisé en ce que ledit signal de synchronisme local est constitué par le signal de sortie de ladite boucle de verrouillage de phase, non alimentée en l'absence de données reçues.

8. Dispositif selon l'une des revendications 3 à 5, caractérisé en ce qu'il comporte des moyens (10, 11) d'émission de données dites de remplacement à la place des données contenues dans ladite mémoire-tampon pendant le blocage du signal d'horloge de lecture de cette mémoire-tampon.

## Claims

1. Asynchronous transfer mode digital telecommunication network terminal equipment synchronisation device comprising means (7) for filtering transfer jitter introduced by a network of this kind and affecting the clock frequency at which said equipment receives data via said network and said filter means (7) including:
- means (10) for slaving the frequency of a local clock signal supplied by a local clock internal to said equipment to the output signal of said filter means;
- and a buffer (MTB1, MTB2) written with said data at the clock frequency at which data is received by said equipment and means (5, 5') for reading said buffer at the clock frequency of said output signal of said frequency control means;
characterised in that the local clock signal frequency control means (10) comprise a phase-locked loop (11 to 16) and a frequency divider (11) deriving said local clock signal from a signal internal to said loop whose frequency is a multiple of the frequency of the loop output signal;
and in that said read means (5, 5') include means (20, 21) for commanding reading with a time-delay relative to writing determined in such a way as to minimise the risks associated with excessively low bit rates in the recovery of data after such reading during the reaction time of said filter and control means without departing from a permissible margin for the data recovery time-delay.

2. Device according to claim 1 characterised in that said buffer is sized to minimise the risks associated with excessively high bit rates in recovering the received data during said reaction times.

3. Device according to claim 1 or claim 2 characterised in that said read means comprise means (41) for disabling the clock signal for reading said buffer at initialisation for a time period corresponding to said time-delay.

4. Device according to claim 3 characterised in that said disabling means are further operable to introduce said time-delay at any time in response to overflow of said buffer.

5. Device according to any one of claims 1 to 4 characterised in that said buffer comprises a cell disassembly buffer used to convert cells received from said network into entities acceptable by said terminal equipment.

6. Device according to any one of claims 1 to 5 characterised in that it further comprises, in the case of terminal equipments sending or receiving on a synchronous medium, means for supplying to said equipment a local synchronisation signal derived from a local clock during the signalling phase during setting up of a call involving said terminal equipment.

7. Device according to claims 1 and 6 characterised in that said local synchronisation signal is the output signal of said phase-locked loop which is not activated in the absence of received data.

8. Device according to any one of claims 3 to 5 characterised in that it comprises means (10, 11) for sending replacement data in place of data contained in said buffer during the disabling of the buffer read clock signal.

## Patentansprüche

1. Synchronisiereinrichtung für eine Endeinrichtung eines Fernmeldenetzes mit einem sogenannten asynchronen Transfermodus, wobei diese Einrichtung Mittel (7) zum Filtern des von einem solchen Netz bewirkten Übertragungsjitters umfaßt, der auf den Empfangstakt der über dieses Netz übertragenen und von der Endeinrichtung empfangenen Daten einwirkt, und wobei diese Filtermittel (7) aufweisen:
- Mittel (10) zur Synchronisation der Frequenz eines örtlichen Taktsignals, das von einem internen örtlichen Taktgeber in der Endeinrichtung geliefert wird, mit der des Signals, das von den Filtermitteln stammt;
- und einen Pufferspeicher (MTB1, MTB2), der mit den Daten im Takt ihres Empfangs durch die Endeinrichtung beschrieben wird, sowie Mittel (5, 5') zum Lesen dieses Pufferspeichers im Takt des von den Frequenzsynchronisationsmitteln stammenden Signals;
dadurch gekennzeichnet, daß die Mittel (10) zur Synchronisation der Frequenz eines örtlichen Taktsignals einen Phasensynchronisationskreis (10, 11-16) und einen Frequenzteiler (11) umfassen, der das örtliche Taktsignal unter Zugrundelegung eines internen Signals dieses Kreises mit einer Frequenz, die einem Vielfachen der Ausgangssignalfrequenz dieses Kreises entspricht, liefert;
und daß die Lesemittel (5, 5') Mittel (20, 21) umfassen, die das Lesens mit einer bezogen auf das Schreiben bestimmten Verzögerung steuern, um die Gefahren zu minimieren, die mit den zu niedrigen Datendurchsätzen beim Wiederherstellen der Daten am Ende dieses Lesevorgangs während der Ansprechzeiten der Filter- und Synchronisationsmittel verbunden sind, wobei sie in einem zulässigen Bereich für die Verzögerung der Wiederherstellung dieser Daten bleiben.

2. Einrichtung nach Anspruch 1, dadurch gekennzeichnet, daß der Pufferspeicher außerdem so dimensioniert ist, daß die Gefahren, die mit den zu hohen Datendurchsätzen beim Wiederherstellen der empfangenen Daten während der besagten Ansprechzeiten verbunden sind, minimiert werden.

3. Einrichtung nach einem der Ansprüche 1 bis 2, dadurch gekennzeichnet, daß die Mittel zum Lesen Mittel (41) umfassen, die das Taktsignal für das Lesen des Pufferspeichers bei der Initialisierung für eine dieser Verzögerung entsprechende Zeitdauer blockieren.

4. Einrichtung nach Anspruch 3, dadurch gekennzeichnet, daß die Mittel zur Blockierung außerdem so gesteuert werden, daß die Einführung der Verzögerung zu jedem Zeitpunkt bei einem Überlaufen des Pufferspeichers erfolgt.

5. Einrichtung nach einem der Ansprüche 1 bis 4, dadurch gekennzeichnet, daß der Pufferspeicher aus einem sogenannten "Entzellungspuffer" besteht, der zur Umwandlung der aus dem Netz empfangenen Zellen in Einheiten dient, die von der Endeinrichtung zugelassen werden.

6. Einrichtung nach einem der Ansprüche 1 bis 5, dadurch kennzeichnet, daß sie außerdem in dem Fall einer Endeinrichtung, die über einen synchronen Träger sendet oder empfängt, Mittel umfaßt, um dieser Endeinrichtung in der Signalisierungsphase während des Aufbaus einer diese Endeinrichtung betreffenden Verbindung ein von einem örtlichen Taktgeber gesendetes Signal für den sogenannten örtlichen Synchronismus zu liefern.

7. Einrichtung nach den Ansprüchen 1 und 6, dadurch gekennzeichnet, daß das Signal für den örtlichen Synchronismus von dem Ausgangssignal des in Abwesenheit empfangener Daten ungespeisten Phasensynchronisationskreises gebildet wird.

8. Einrichtung nach einem der Ansprüche 3 bis 5, dadurch gekennzeichnet, daß sie Mittel (10, 11) zum Senden von sogenannten Ersatzdaten anstelle der in dem Pufferspeicher enthaltenen Daten während der Blockierung des Lesetaktsignals dieses Pufferspeichers umfaßt.
